# EUROPEAN PATENT SPECIFICATION

(11) **EP 2 423 014 B1**
(45) Date of publication and mention of the grant of the patent: **13.03.2013**
(21) Application number: 10090008.3
(22) Date of filing: 27.08.2010
(51) Int. Cl.: B60H 1/00, B61D 27/00, B60Q 3/02

(54) **Track-bound vehicle, in particular rail vehicle, and method of operating the same**
Schienenfahrzeug, insbesondere Bahnfahrzeug, und Betriebsverfahren dafür
Véhicule relié à des rails, en particulier un véhicule ferroviaire et son procédé de fonctionnement

(43) Date of publication of application: 29.02.2012
(73) Proprietor: Bombardier Transportation GmbH, 10785 Berlin (DE)
(72) Inventor: De Coen, Luc, 9230 Wetteren (BE); Conan, Loïc, 59130 Lambersart (FR)
(74) Representative: Patentanwälte Bressel und Partner

(56) References cited:
- EP-A2- 0 149 450
- WO-A1-2009/063148
- DE-U1- 20 311 981
- US-A- 4 000 400

## Description

The invention relates to a track-bound vehicle, in particular a rail vehicle, having a plurality of passenger compartments. Furthermore, the invention relates to a method of operating such a vehicle.

A passenger compartment is understood to be a space in which passengers may travel within the vehicle, for example while sitting or standing. The compartment may be, for example, a classical compartment having six or eight seats, or may be a compartment having more seats, such as in modern saloon coaches. In case of a double-deck coach the upper deck and the lower deck may form separate compartments, for example. Regardless of the type of coach, the compartment may be divided in sub-compartments. It is also possible that the compartment may correspond to a complete coach of the vehicle. The vehicle may be a train having a plurality of coaches which are coupled to each other.

There are increasing requirements to reduce energy consumption during operation of track-bound vehicles, in particular rail vehicles. One option is to increase the efficiency of the systems and devices within the vehicle with respect to energy-consumption. Another option is to indicate to the driver of the vehicle that he may drive the vehicle in a more energy effective way.

DE 20311 981 U1 discloses an air condition unit for rail vehicles with indirect cooling circuit with a liquid as cooling carrier. The liquid circuit provides air treatment devices in the respective compartments with the cooling carrier and the cooling power of each air treatment device can be adapted individually for each compartment to the required compartment temperature by adapting the liquid flow. The cooling power results from the cooling load and the specific temperature requirements of the passengers in each compartment. The liquid flow can be adjusted by reducing the flow in the respective air treatment device.

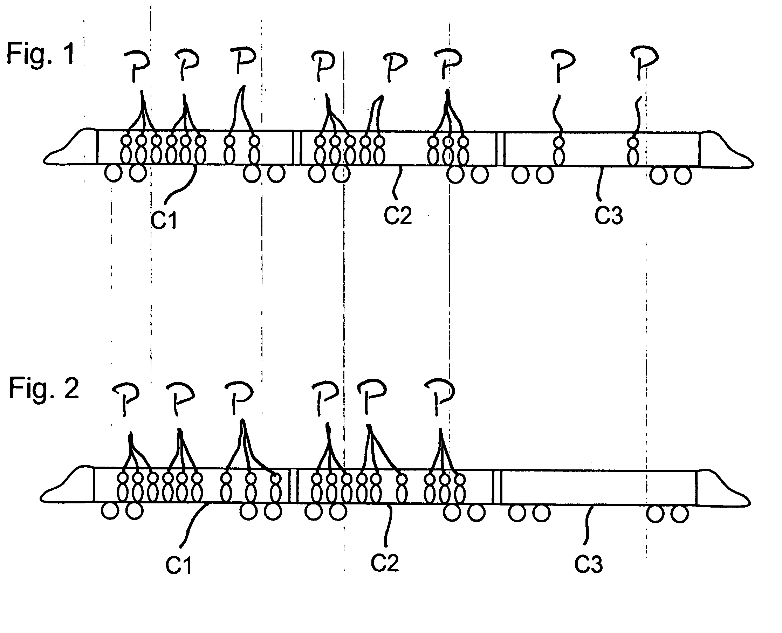

EP 0149 450 A2 discloses an air conditioning device for rail vehicles with passenger compartments and an additional heating in each compartment. A reduction device for the air inlet in each compartment is provided. In case of a reduced passenger number, which results in an increased additional heating, the air inlet is reduced by a predetermined value. This results in savings of heating and operation energy, because each compartment is provided with the required amount of air, only. In the embodiment described in connection with Fig. 1 and Fig. 2 of the document, the number of passengers may decrease and, as a consequence, the heat radiation caused by the remaining passengers is reduced compared to the heat radiation of the passengers of a fully occupied compartment. This results in a positive output signal of a control amplifier, which in turn leads to a reduction of the air inlet and to energy savings.

WO 2009/063148 A1 discloses a rail vehicle comprising an apparatus for illuminating a passenger compartment having a number of seats for passengers. The apparatus comprises at least one light source fastened to the inside of the passenger compartment, and a control unit connected to the light source. The apparatus further comprises at least one light sensor connected to the control unit, the sensor being able to provide a measurement signal of the light intensity in the passenger compartment. The control unit is adapted to control each light source as a function of the signal provided by the light sensor. There is a presence sensor for each seat, which is connected to the control unit. The control unit is capable of controlling each light source as a function of a passenger absence or presence signal provided by the respective presence sensor. The control unit is also adapted to send instructions to an air outlet valve of an air-conditioning system, the valve being combined with air vents attached on the side of the seats. During a control procedure, the control unit determines the number of sitting passengers in the compartment according to the signals supplied by the presence sensors and calculates an opening position of the valve according to the number of sitting passengers. The procedure is repeated in order to take into account a possible variation of the number of sitting passengers.

It is an object of the present invention to reduce the energy consumption while operating a track-bound vehicle, in particular a rail vehicle.

The attached claims define the scope of protection.

It is a basic idea of the present invention to use information about the number of passengers in the compartments of the vehicle to control the operation of systems and devices which are associated with the respective compartment and/or which are connected to the compartment. The control is performed in such a manner that the energy consumption of the systems and/or devices is reduced.

US 5,485,347 describes for a train having a plurality of cars to automatically count a number of persons entering and a number of persons exiting each of a plurality of enclosed areas of the train. However, this information is only used to inform passengers waiting for the train at the next train station about the occupational status of the train.

Such a system for automatically determining the number of persons or passengers within the enclosed areas, i.e. within the compartments, can be used to obtain and/or to determine the passenger number for the purposes according to the present invention.

In addition or alternatively, statistical information about the expected number of passengers can be used. For example, numbers of passengers travelling on the same route at specific days during the week and/or at a specific season in the year may form a reliable basis for predicting the passenger number. In addition or alternatively, the expected passenger number may be received from a central passenger ticket booking system of the vehicle operator. Still another type of input information for making the decision whether energy consumption can be reduced is information input by the vehicle staff, in particular the driver. He or she may input the level of passenger occupation, for example "half the vehicle will be occupied". The different types of information can be combined. It is also possible that the vehicle staff directly inputs a request to take at least one compartment out of service, which automatically triggers the reduction of the energy consumption for operating this compartment.

In particular, coaches and/or compartment at the end or at another part of a train may be taken out of service if the number of passengers within the respective coach is small or zero. However, the coach may stay part of the vehicle (e.g. the train). If the coach - or more generally speaking the compartment - is out of service, the respective devices and systems which are operated to provide comfort to the passengers (such as heating, ventilation and/or air conditioning systems, lights and passenger information systems) can be switched off or can be switched to standby. A set temperature of the heating system may be reduced. A set temperature of the air conditioning system may be increased.

The invention has the advantage that the vehicle can continue travelling while at least one compartment is out of service and, as a result, the energy consumption is reduced.

According to a further possible way of using the information about the passenger number a vehicle which is in the process of being prepared for travelling on a route can be prepared to provide space for the maximum expected number of passengers only, but comprises at least one additional compartment for additional passengers during later phases of the travel. For example, at least one specific compartment may be out of service when the travel starts at the first station on the route. However, it is possible that a compartment, which is out of service, is set to standby, so that the time required for putting the compartment in "ready for service" mode is small. For example, the heating system may be set to a temperature smaller than the service temperature or the air-conditioning system may be set to a temperature higher than the service temperature.

In any case when a compartment is out of service, it is preferred that this compartment is in standby mode so that it can be prepared for service within a short period of time.

In particular, the following is proposed: a track-bound vehicle, in particular a rail vehicle, having a plurality of passenger compartments, wherein:
- at least one energy-consuming device, in particular a heating, ventilating and/or air conditioning system, a light system for illuminating the compartment and/or a passenger information system, is associated with and/or connected to each passenger compartment,
- the vehicle comprises a passenger number determining device which is adapted to determine the number of passengers and/or comprises an interface for receiving information about the passenger number,
- the vehicle comprises a control device for controlling at least a part of the energy-consuming devices,
- the control device is connected to the passenger number determining device and/or to the interface and is adapted to control the energy-consuming devices in such a manner that the energy consumption of at least one energy-consuming device which is associated with and/or connected to a passenger compartment is reduced or stopped, if the passenger number, in particular the passenger number of the compartment, fulfils a first predetermined condition.

Furthermore, a method of operating a track-bound vehicle is proposed, in particular a rail vehicle, having a plurality of passenger compartments, wherein:
- for each passenger compartment at least one energy-consuming device, in particular a heating, ventilating and/or air conditioning system, a light system for illuminating the compartment and/or a passenger information system, is operated in association with and/or while being connected to the respective passenger compartment,
- the number of passengers is automatically determined and/or information about the number of passengers is received,
- at least a part of the energy-consuming devices, which are operated in association with and/or while being connected to the respective passenger compartment, are automatically controlled in such a manner that the energy consumption of the least one energy-consuming device is reduced or stopped, if the passenger number, in particular the passenger number of the compartment, fulfils a first predetermined condition.

The passenger number which is used to determine if it fulfils a first and/or second predetermined condition can be the actual passenger number, a predicted passenger number, a combination of the numbers or information which is determined using one or more than one of these numbers.

Reduction of the energy consumption does not necessarily mean a reduction of the energy which is actually consumed. It also includes the preparation of the compartment for service, wherein the energy-consuming devices are not or not fully operated. Therefore the energy consumed is reduced compared to the hypothetical case that the energy-consuming devices are operated at full energy consumption. Stopping the energy consumption of the least one energy-consuming device also includes the case that operation of the energy-consuming device is not started.

In particular, the following information may be used to determine the passenger number of a compartment:
- the actual passenger number counted by the on-board passenger number determining device, which is preferably counted for each compartment separately, so that the decision to withdraw the compartment from service can be based on the counted number of passengers within the compartment and - optionally - can be based as well on the counted passenger number within at least one other compartment (so that remaining passengers within the compartment can be re-seated or re-located);
- statistical information about passenger occupation. This statistical information may be output by the on-board passenger number determining device and may take into account passenger numbers counted and/or received in the past;
- information from a vehicle-external booking and/or reservation system, such as a system operated by the owner of a fleet of vehicles; and/or
- information about the actual passenger occupation. This information can be received, as mentioned, from the passenger number determining device on-board the vehicle.

According to the claims, the first predetermined condition is the condition that the actual or expected passenger number, namely the passenger number within the respective compartment, is smaller than a predetermined threshold value, such as two or one. There may be a second predetermined condition. According to the claims, this second predetermined condition is that the actual passenger number within the respective compartment is smaller than a second predetermined threshold value, wherein the second predetermined threshold value is larger than the first predetermined threshold value. The control device is adapted to automatically generate and output an indication for informing passengers and/or vehicle staff that the compartment is withdrawn from service, if the passenger number of the compartment fulfils the first predetermined condition and the second predetermined condition. For example, if there are only four or five passengers within a saloon compartment, the second predetermined condition may be fulfilled and the indication is made. The remaining passengers within the compartment may be required by the indication to leave the compartment. The passenger number determining device may detect that the remaining passengers leave the compartment and then the first predetermined condition may be fulfilled.

Preferably, the control device outputs a control signal which automatically results in the doors to the compartment being locked (preferably locked for entrance, but not for exit) so that no person can re-enter the compartment.

Compartment-external indicators, in particular coach-external indicators, may indicate that the compartment is not in service.

The control device may transmit a message to a vehicle-external system (such as a vehicle fleet control system) that the compartment is out of service. Of course, there should be a way of bringing back the compartment to service, for example by the vehicle staff or on receipt of a vehicle-external message. As a result, the information about the compartments which are in service and which are out of service may be communicated to vehicle-external devices and systems and may be influenced by these vehicle-external devices and systems. In particular, this information or part of this information (for example the information that a specific compartment is not in service) may be communicated to persons who are travelling with the vehicle in other compartments or in a compartment which is to be taken out of service or to persons outside of the vehicle who intend to enter the vehicle and, for example, are waiting for the vehicle at the next station.

Optionally, an on-board system which comprises a camera or a plurality of cameras may evaluate pictures taken of a specific compartment in order to check if there is no passenger in the compartment, before the compartment is taken out of service, in particular before the doors are locked.

Examples of the present invention will be described with reference to the attached figures. The figures show:
- Fig. 1: schematically a train having three coaches, wherein only a few passengers are travelling in one of the coaches,
- Fig. 2: the train of Fig. 1, wherein the remaining passengers have left the coach and the coach is withdrawn from service,
- Fig. 3: schematically devices and systems which are connected to the coaches of the train shown in Fig. 1 and Fig. 2, wherein the operation of the devices can be controlled by a central control device of the train.
The train shown in Fig. 1 comprises three coaches C1, C2, C3. Several passengers P are travelling in coaches C1, C2, C3. However, there are only two passengers P travelling in coach C3. A passenger number determining device (not shown in Fig. 1) determines the passenger numbers in the coaches C1, C2, C3. A threshold value is defined for the passenger number in the coaches. For example, the threshold value may be three. Since there are only two passengers P in coach C3, the actual passenger number is smaller than the threshold value and, as a result, the passengers in coach C3 are automatically requested to leave the coach C3. Optionally, the control device which requests the passengers P in coach C3 to leave the coach, may evaluate the passenger numbers in at least one of the other coaches in order to determine available space for passengers in the other coaches. In the unlikely case that all other coaches C1, C2 do not offer sufficient available space for further passengers, the passengers in coach C3 are not requested to leave the coach.

Fig. 2 shows the resulting situation. The two passengers P of coach C3 have left the coach and the coach C3 is withdrawn from service, but continues to be part of the train.

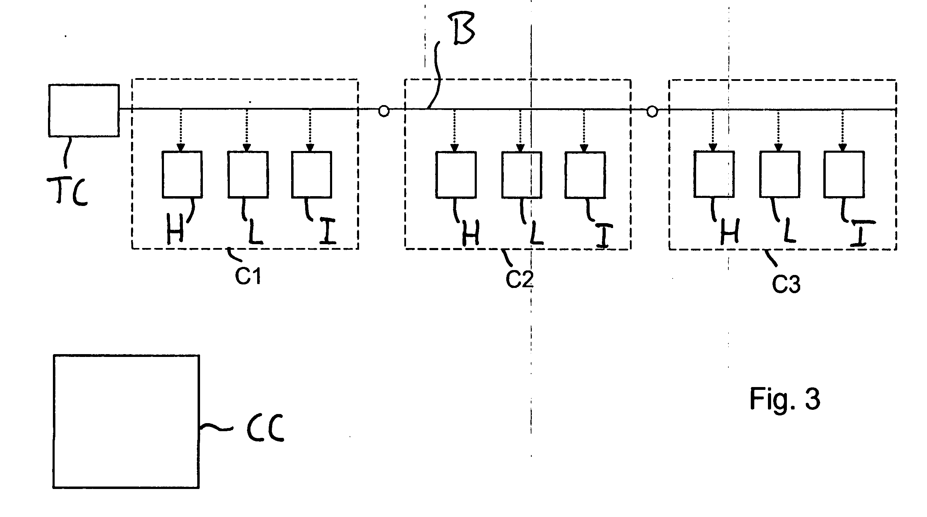

Fig. 3 schematically shows energy consuming devices which are operated to maintain comfort for passengers travelling within the respective coach. In particular, each coach C1, C2, C3 comprises a heating system H, a light system L and a passenger information system I. These systems may be parts of a train-wide system. For example, the central control of the heating system may be located in a locomotive or in the first coach C1. The same applies to the passenger information system and, optionally, to the light system. There may be further devices or systems which are associated with one of the coaches. More generally speaking, all devices and systems or parts thereof can be switched off or can be switched to standby if there is no passenger in the coach.

The systems H, L, I are connected to a central control device TC via a data bus B. The central control device TC may also be adapted to evaluate the passenger number information provided by the passenger number determining device. Alternatively, the central control device TC may receive from another control device the information that a specific coach has been withdrawn from service. In this case, the central control device TC outputs control signals to reduce energy consumption of the systems H, L, I in the respective coach. For example, the coach C3 has been withdrawn from service. As a result, the central control device TC outputs control signals to the heating system H, the light system L and the passenger information system I in coach C3 so that the systems H, L, I are switched off or switched to standby. For example, the heating system may be controlled to reduce the temperature within the passenger compartment to a smaller room temperature. In addition, the light system may be switched off, optionally with the exception of emergency light. Furthermore, the passenger information system in coach C3 may be switched off completely.

The central control device TC may transmit a message to a stationary control centre CC, which is not located within the train and which is preferably the control centre of the operator of the vehicle fleet. The transmitted message comprises the information that a specific coach has been withdrawn from service, in particular coach C3. Furthermore, the message may optionally comprise information about the available space for passengers in the other coaches C1, C2.

## Claims

1. A track-bound vehicle, in particular a rail vehicle, having a plurality of passenger compartments (C1, C2, C3), wherein:
- at least one energy-consuming device (H, L, I), in particular a heating, ventilating and/or air conditioning system (H), a light system (L) for illuminating the compartment (C1, C2, C3) and/or a passenger information system (I), is associated with and/or connected to each passenger compartment (C1, C2, C3),
- the vehicle comprises a passenger number determining device which is adapted to determine the number of passengers in each compartment (C1, C2, C3) and/or comprises an interface for receiving information about the passenger number,
- the vehicle comprises a control device (TC) for controlling at least a part of the energy-consuming devices (H, L, I),
- the control device (TC) is connected to the passenger number determining device and/or to the interface and is adapted to control the energy-consuming devices (H, L, I) in such a manner that the energy consumption of at least one energy-consuming device (H, L, I) which is associated with and/or connected to a passenger compartment (C1, C2, C3) is reduced or stopped, if the passenger number, in particular the passenger number of the compartment (C1, C2, C3), fulfils a first predetermined condition, namely that the actual or expected passenger number within the respective compartment is smaller than a first predetermined threshold value,
- the control device (TC) is further adapted to automatically generate and output an indication for informing passengers and/or vehicle staff that the respective compartment is withdrawn from service, if the passenger number of the respective compartment fulfils a second predetermined condition, namely that the actual passenger number within the compartment is smaller than a second predetermined threshold value, wherein the second predetermined threshold value is larger than the first predetermined threshold value.

2. A method of operating a track-bound vehicle, in particular a rail vehicle, having a plurality of passenger compartments (C1, C2, C3), wherein:
- for each passenger compartment (C1, C2, C3) at least one energy-consuming device (H, L, I), in particular a heating, ventilating and/or air conditioning system (H), a light system (L) for illuminating the compartment (C1, C2, C3) and/or a passenger information system (I), is operated in association with and/or while being connected to the respective passenger compartment (C1, C2, C3),
- the number of passengers in each compartment (C1, C2, C3) is automatically determined and/or information about the number of passengers is received,
- at least a part of the energy-consuming devices (H, L, I), which are operated in association with and/or while being connected to the respective passenger compartment (C1, C2, C3), are automatically controlled in such a manner that the energy consumption of the least one energy-consuming device (H, L, I) is reduced or stopped, if the passenger number, in particular the passenger number of the compartment (C1, C2, C3), fulfils a first predetermined condition, namely that the actual or expected passenger number within the respective compartment is smaller than a first predetermined threshold value,
- an indication for informing passengers and/or vehicle staff that the respective compartment is withdrawn from service is automatically generated and output, if the passenger number of the respective compartment fulfils a second predetermined condition, namely that the actual passenger number within the compartment is smaller than a second predetermined threshold value, wherein the second predetermined threshold value is larger than the first predetermined threshold value.

## Patentansprüche

1. Gleisgebundenes Fahrzeug, insbesondere Schienenfahrzeug, das mehrere Fahrgastabteile (C1, C2, C3) besitzt, wobei:
- jedem Fahrgastabteil (C1, C2, C3) wenigstens eine energieverbrauchende Vorrichtung (H, L, I) zugeordnet ist und/oder damit verbunden ist, insbesondere ein Heizungs-, Belüftungs- und/oder Klimatisierungssystem (H), ein Beleuchtungssystem (L) zum Beleuchten des Abteils (C1, C2, C3) und/oder ein Fahrgastinformationssystem (I),
- das Fahrzeug eine Fahrgastanzahl-Bestimmungsvorrichtung, die dafür ausgelegt ist, die Anzahl von Fahrgästen in jedem Abteil (C1, C2, C3) zu bestimmen, und/oder eine Schnittstelle zum Empfangen von Informationen über die Fahrgastanzahl umfasst,
- das Fahrzeug eine Steuervorrichtung (TC) zum Steuern wenigstens eines Teils der energieverbrauchenden Vorrichtungen (H, L, I) umfasst,
- die Steuervorrichtung (TC) mit der Fahrgastanzahl-Bestimmungsvorrichtung und/oder mit der Schnittstelle verbunden ist und dafür ausgelegt ist, die energieverbrauchenden Vorrichtungen (H, L, I) in der Weise zu steuern, dass der Energieverbrauch wenigstens einer energieverbrauchenden Vorrichtung (H, L, I), die dem Fahrgastabteil (C1, C2, C3) zugeordnet ist und/oder damit verbunden ist, verringert oder gestoppt wird, falls die Fahrgastanzahl, insbesondere die Fahrgastanzahl des Abteils (C1, C2, C3), eine erste vorgegebene Bedingung erfüllt, nämlich dass die tatsächliche oder erwartete Fahrgastanzahl in dem jeweiligen Abteil kleiner ist als ein erster vorgegebener Schwellenwert, und
- die Steuervorrichtung (TC) ferner dafür ausgelegt ist, automatisch eine Angabe zum Informieren von Fahrgästen und/oder des Fahrzeugpersonals, dass das jeweilige Abteil außer Dienst genommen wird, zu erzeugen und auszugeben, falls die Fahrgastanzahl des jeweiligen Abteils eine zweite vorgegebene Bedingung erfüllt, nämlich dass die tatsächliche Fahrgastanzahl in dem Abteil kleiner als ein zweiter vorgegebener Schwellenwert ist, wobei der zweite vorgegebene Schwellenwert größer ist als der erste vorgegebene Schwellenwert.

2. Verfahren zum Betreiben eines gleisgebundenen Fahrzeugs, insbesondere eines Schienenfahrzeugs, das mehrere Fahrgastabteile (C1, C2, C3) besitzt, wobei:
- für jedes Fahrgastabteil (C1, C2, C3) wenigstens eine energieverbrauchende Vorrichtung (H, L, I), insbesondere ein Heizungs-, Belüftungs- und/oder Klimatisierungssystem (H), ein Beleuchtungssystem (L) zum Beleuchten des Abteils (C1, C2, C3) und/oder ein Fahrgastinformationssystem (I), in Zuordnung zu dem jeweiligen Fahrgastabteil (C1, C2, C3) betrieben wird und/oder währenddessen damit verbunden ist,
- die Anzahl von Fahrgästen in jedem Abteil (C1, C2, C3) automatisch bestimmt wird und/oder Informationen über die Anzahl von Fahrgästen empfangen werden,
- wenigstens ein Teil der energieverbrauchenden Vorrichtungen (H, L, I), die in Zuordnung zu dem jeweiligen Fahrgastabteil (C1, C2, C3) betrieben werden und/oder währenddessen damit verbunden sind, automatisch in der Weise gesteuert wird, dass der Energieverbrauch der wenigstens einen energieverbrauchenden Vorrichtung (H, L, I) verringert oder gestoppt wird, falls die Fahrgastanzahl, insbesondere die Fahrgastanzahl des Abteils (C1, C2, C3), eine erste vorgegebene Bedingung erfüllt, nämlich dass die tatsächliche oder erwartete Fahrgastanzahl in dem jeweiligen Abteil kleiner ist als ein erster vorgegebener Schwellenwert,
- eine Angabe zum Informieren von Fahrgästen und/oder von Fahrzeugpersonal, dass das jeweilige Abteil außer Dienst genommen wird, automatisch erzeugt und ausgegeben wird, falls die Fahrgastanzahl des jeweiligen Abteils eine zweite vorgegebene Bedingung erfüllt, nämlich dass die tatsächliche Fahrgastanzahl in dem Abteil kleiner ist als ein zweiter vorgegebener Schwellenwert, wobei der zweite vorgegebene Schwellenwert größer ist als der erste vorgegebene Schwellenwert.

## Revendications

1. Véhicule roulant sur rails, en particulier un véhicule ferroviaire, comportant une pluralité de compartiments de passagers (C1, C2, C3), dans lequel :
- au moins un dispositif consommant de l'énergie (H, L, I), en particulier un système de chauffage, de ventilation et/ou de climatisation (H), un système d'éclairage (L) pour éclairer le compartiment (C1, C2, C3) et/ou un système d'information de passager (I), est associé et/ou relié à chaque compartiment de passagers (C1, C2, C3),
- le véhicule comprend un dispositif de détermination de nombre de passagers qui est apte à déterminer le nombre de passagers dans chaque compartiment (C1, C2, C3) et/ou comprend une interface pour recevoir des informations sur le nombre de passagers,
- le véhicule comprend un dispositif de commande (TC) pour commander au moins une partie des dispositifs consommant de l'énergie (H, L, I),
- le dispositif de commande (TC) est relié au dispositif de détermination de nombre de passagers et/ou à l'interface et est apte à commander les dispositifs consommant de l'énergie (H, L, I) de manière à réduire ou à arrêter la consommation d'énergie de l'au moins un dispositif consommant de l'énergie (H, L, I) qui est associé et/ou relié à un compartiment de passagers (C1, C2, C3) si le nombre de passagers, en particulier le nombre de passagers du compartiment (C1, C2, C3), remplit une première condition prédéterminée, en l'occurrence que le nombre de passagers réel ou prévu à l'intérieur du compartiment respectif soit inférieur à une première valeur de seuil prédéterminée,
- le dispositif de commande (TC) est en outre apte à automatiquement générer et délivrer une indication pour informer les passagers et/ou le personnel du véhicule que le compartiment respectif est mis hors service, si le nombre de passagers du compartiment respectif remplit une deuxième condition prédéterminée, en l'occurrence que le nombre de passagers réel à l'intérieur du compartiment soit inférieur à une deuxième valeur de seuil prédéterminée, dans lequel la deuxième valeur de seuil prédéterminée est supérieure à la première valeur de seuil prédéterminée.

2. Procédé de fonctionnement d'un véhicule roulant sur rails, en particulier un véhicule ferroviaire, comportant une pluralité de compartiments de passagers (C1, C2, C3), dans lequel :
- pour chaque compartiment de passagers (C1, C2, C3), au moins un dispositif consommant de l'énergie (H, L, I), en particulier un système de chauffage, de ventilation et/ou de climatisation (H), un système d'éclairage (L) pour éclairer le compartiment (C1, C2, C3) et/ou un système d'information de passager (I), est en fonctionnement en association avec le compartiment de passagers (C1, C2, C3) respectif et/ou en étant relié à celui-ci,
- le nombre de passagers dans chaque compartiment (C1, C2, C3) est automatiquement déterminé et/ou des informations sur le nombre de passagers sont reçues,
- au moins une partie des dispositifs consommant de l'énergie (H, L, I) qui sont en fonctionnement en association avec le compartiment de passagers (C1, C2, C3) respectif et/ou en étant reliés à celui-ci, sont automatiquement commandés de manière à réduire ou à arrêter la consommation d'énergie de l'au moins un dispositif consommant de l'énergie (H, L, I), si le nombre de passagers, en particulier le nombre de passagers du compartiment (C1, C2, C3), remplit une première condition prédéterminée, en l'occurrence que le nombre de passagers réel ou prévu à l'intérieur du compartiment respectif soit inférieur à une première valeur de seuil prédéterminée,
- une indication pour informer les passagers et/ou le personnel du véhicule que le compartiment respectif est mis hors service est automatiquement générée et délivrée, si le nombre de passagers du compartiment respectif remplit une deuxième condition prédéterminée, en l'occurrence que le nombre de passagers réel à l'intérieur du compartiment soit inférieur à une deuxième valeur de seuil prédéterminée, dans lequel la deuxième valeur de seuil prédéterminée est supérieure à la première valeur de seuil prédéterminée.
